# EUROPEAN PATENT APPLICATION

(11) **EP 4 650 618 A1**
(43) Date of publication of application: **19.11.2025**
(21) Application number: 24382520.5
(22) Date of filing: 14.05.2024
(51) Int. Cl.: F16D 65/097

(54) **BRAKE ASSEMBLY**

(71) Applicant: ZF AFTERMARKET IBERICA, S.L., 31591 Corella Navarra (ES)
(72) Inventor: ORRANTIA, Julen, 31170 Iza (ES)
(74) Representative: ZF Friedrichshafen AG

(57) **Abstract**

The present invention relates to a brake assembly (1) comprising a brake backing plate (3) configured for attachment of a brake pad and a brake pad shim (2) configured for attenuating a vibration during a braking process. One of the brake backing plate (3) and the brake pad shim (2) comprises two alignment surfaces (12, 13) formed by at least one opening (8; 9). The other one of the brake backing plate (3) and the brake pad shim (2) comprises two alignment protrusions (5, 6). The alignment protrusions (5, 6) are configured to engage with the two alignment surfaces (12, 13) for aligning the brake backing plate (3) and the brake pad shim (2) in a predetermined alignment state. Further, the opening (8; 9) is substantially unobstructed by the engagement of the protrusions (5, 6) with the alignment surfaces (12, 13) in the alignment state. The invention also relates to a vehicle comprising such a brake assembly, and a method for assembling such a brake assembly.

## Description

### TECHNICAL FIELD

The present invention relates to a brake assembly for a vehicle comprising a brake backing plate and a brake pad shim. The present invention also relates to a vehicle with such a brake assembly and to a method for assembling such a brake assembly.

### Background

It is known in the state of the art to provide a brake assembly with a brake pad noise insulator shim to reduce noise during braking operations. The European patent application EP 3 851 699 A1 relates to a disk brake device comprising a back plate, a pin receiving portion, a pad pin receiver with a body plate and a bent plate. The body plate of the pad pin receiver covers a portion of an inner peripheral surface of the pin insertion portion while the shim plate may be integrally formed with the pin receiver.

### Summary of the invention

The present invention relates to a brake assembly comprising a brake backing plate and a brake pad shim. The brake assembly may be configured to engage with a rotating element to effect a braking force and thereby act against a rotation of the rotating element. In an embodiment, the brake assembly may be configured to engage with a brake disk that is attached to, and configured to co-rotate with, a rotating element, for example with a wheel of a vehicle. The brake backing plate may be a plate configured to support other elements of a brake assembly. For example, the brake backing plate may support a brake pad, which may be configured to effect a braking force when pushed against another moving element. To support another element of a brake assembly may mean that the element is attached to the brake backing plate. The brake backing plate can be arranged to move relative to a rotating element along an axial direction, which may be parallel to an axis of rotation of the rotating element. Additionally or alternatively, an axial direction may be normal to a substantially planar surface of the brake backing plate. The brake backing plate can be arranged to move along the axial direction until it, or an element attached to it, contacts the rotating element for exerting a force against the rotatable element, e.g. to effect a braking force. For this, the brake backing plate may be arranged inside a caliper assembly configured to move the brake backing plate towards a brake disk to exert a braking force. The brake backing plate may be manufactured from a material comprising at least one of steel, aluminum, magnesium and an alloy. It may additionally or alternatively comprise at least one of a polymer and a ceramic, and may be reinforced with fibers. It may be manufactured by casting, milling and/or other manufacturing methods.

The brake pad shim is configured to attenuate a vibration during a braking process. This may comprise at least one of reducing a noise, harshness and other undesirable effects of braking when the brake assembly brakes. The brake pad shim can be configured for this by dampening vibrations or additionally by acting as a noise insulator, thereby preventing vibrations and noises to be transferred throughout a structure such as a vehicle. The brake pad shim can be configured to be attached to the brake backing plate and be attached to a side opposite to a brake pad on the brake backing plate. The brake pad shim is configured to be aligned relative to the brake backing plate, e.g. aligned in a spatial pose. A spatial pose between two components may refer to a position and orientation of the two components relative to each other. The brake pad shim may be manufactured from a single sheet of material by punching, die cutting, casting and/or other manufacturing method. It may additionally require processing steps such as bending, e.g. bending of a flap. The brake pad shim may also be manufactured from multiple parts, which may be assembled by at least one of gluing, screwing, soldering, welding and other methods. The brake pad shim may comprise a main body, which may be formed by a plate. The main body may be substantially rectangular in shape, or alternatively oval, or have a further, substantially flat shape. Preferably, the main body has a shape adapted for manufacture by punching or die cutting. The main body can be configured to dampen, block or absorb vibrations generated during braking, or a combination of these.

Of the brake backing plate and the brake pad shim, one comprises two alignment surfaces formed by at least one opening. Preferably, the opening can comprise a hole passing through the brake backing plate or brake pad shim. A hole may be a void or opening comprising a closed parameter around a void of material formed in the brake backing plate or brake pad shim. The hole can be substantially rectangular, e.g. substantially rectangular with rounded corners. The opening can also comprise a recess along a circumference of the brake backing plate or brake pad shim, e.g. a substantially rectangular recess with rounded corners. A recess may be an area along the circumference of the brake backing plate or brake pad shim in which the circumference displays a concave shape, such that an element may engage with it. An alignment surface may be a surface of the opening, which circumscribes the opening. In an embodiment, an alignment surface can be parallel to an axial direction of the opening. The two alignment surfaces may be formed by one opening or may also be formed by two openings. If the two alignment surfaces are formed by one opening, the two surfaces may be distinct surfaces of the opening.

Of the brake backing plate and the brake pad shim, the other one comprises two alignment protrusions to engage with the two alignment surfaces for aligning the brake backing plate and the brake pad shim in a predetermined alignment state. The predetermined alignment state may be a state in which the brake pad shim and the brake backing plate are in a defined spatial pose relative to each other. This may mean that they are in a defined translatory and rotatory state relative to each other. It may mean that the alignment protrusions are aligned with the alignment surfaces. In an embodiment, the alignment state may comprise the main body of the brake pad shim being arranged at the brake backing plate, e.g. in contact with the brake backing plate. An engagement of the alignment protrusion and the opening may comprise a physical contact between an alignment protrusion and a side surface of the opening. Such a physical contact may comprise a substantially planar surface of the alignment protrusion and a wall of the opening being in contact. Additionally or alternatively, an engagement may further comprise a physical contact with a front or a back side of the material circumscribing the opening. In such a case, a planar surface of the alignment protrusions may contact a planar surface of a front or back side of the brake pad shim or backing plate, such that the planar surfaces are parallel to each other. The alignment protrusions may then comprise a bracket or L-shape, or another appropriate geometry.

The opening is substantially unobstructed by the engagement of the alignment protrusions with the alignment surfaces in the alignment state. To be unobstructed may mean to allow passage of parts through the opening. For example, the opening may be unobstructed in such a way as to allow the passage of a bolt, screw, rod, or other attachment or guiding element. The opening is substantially unobstructed by the engagement elements. It may however be obstructed by other elements, such as the aforementioned bolt, screw, rod, or other attachment or guiding elements, when the brake assembly is in its intended use. The opening may also be obstructed by a brake disc, caliper, tube, pipe, cable, mechanical or electronic element or other element of a brake assembly or of a vehicle during the intended use of the brake assembly. To be substantially unobstructed may mean to be unobstructed in such a way as to allow the passage of an element able to transmit a mechanical force for braking a vehicle, e.g. a conventional passenger car. Alternatively or additionally, to be substantially unobstructed may mean that at least 50% of the cross section of the opening is unobstructed. In an embodiment it may mean that at least 70%, at least 80%, or even at least 90% of the opening is unobstructed. The opening is unobstructed by the alignment protrusions in the alignment state, i.e. when the alignment protrusions are in engagement with the alignment surfaces. The opening may, however, be obstructed when the brake assembly is not in the alignment state, for example during an assembly, a construction, an alignment, or a transport phase.

Through use of alignment means such as protrusions and alignment surfaces, assembly of the brake assembly is improved. The alignment of the brake pad shim with the brake backing plate is simplified as the engagement of the alignment means to each other ensures that the brake pad shim can only be attached in a specific position and orientation. This can reduce needed assembly time, simplify operations, improve quality, and reduce error rates when assembling the brake assembly. Further, the alignment protrusions and alignment surfaces may be configured to align the brake pad shim and the brake backing plate substantially parallel to each other during assembly. Additionally, by providing an opening, which is substantially unobstructed in the alignment state, the brake assembly may further provide an additional function for the opening. This can result in a brake assembly with reduced weight, cost, manufacturing time or complexity, as the opening may provide a dual function.

In an embodiment of the present invention, the brake backing plate comprises a first opening forming a first alignment surface and a second opening forming a second alignment surface. The first opening and the second opening may both comprise a hole. Alternatively, only one or neither of the openings may comprise a hole. The two openings may be arranged symmetrically about the brake backing plate, for example symmetrically about a central axis of the brake backing plate. A central axis of the brake backing plate may be an axis running vertically through the middle of the brake backing plate. It may alternatively be an axis running horizontally or axially along the center of the brake backing plate. Preferably, the openings may be arranged towards the top of the brake backing plate. If the brake backing plate comprises the opening, the brake pad shim may comprise the alignment protrusions which engage with the alignment surfaces. By providing a brake backing plate with two alignment surfaces formed by two openings, a brake assembly with a particularly resilient alignment is provided. By providing the alignment surfaces as being formed by two holes, a rotation of the brake pad shim relative to the brake backing plate may be suppressed particularly well.

In an embodiment of the present invention, the first and second openings are provided at the top left and right corner regions of the brake backing plate. The direction pointing towards the top of the brake backing plate may be defined as being in a top direction when the brake backing plate is in its intended use. For example, if the brake assembly is mounted inside a vehicle, the top direction may be a direction pointing up in that state. This may be a direction opposite to the direction of gravity or a direction of the brake backing plate opposite to the ground. Alternatively, the top direction may be a direction towards the top when the brake assembly is being assembled, the top being a direction opposite to the direction of gravity. The terms left and right may be understood as defining opposite sides of a central line between them, in particular on opposite sides of a centerline. The terms left and right depend on the direction of observation of the assembly. Therefore, any characteristic which may apply to the left side may also apply to the right side when the assembly is viewed from an opposite direction. Corner regions may be understood as being peripheral regions, that is regions which are not in the center. In particular, they may be regions where a top or bottom side intersect with a left or right side of the brake backing plate. A bottom side is a side opposite to top side. A left and a right side may be sides arranged between these. In an embodiment, the corner regions may be protruding from a main section of the brake backing plate. Alternatively, they may also form the corners of a main section of the brake backing plate.

By providing a brake backing plate with the openings at the top corner regions, the advantages of an improved alignment and a simplified assembly are realized. For example, it may be easier for a human operator or a machine to distinguish a top and a bottom side of the brake pad shim or the brake backing plate. Further, an assembly may be simplified, as aligning the elements at the top may be easier, as the weight of the objects is substantially below the alignment elements. This may be seen as analogous to hanging a painting for a human operator. This is in contrast to an assembly where the alignment elements are at the bottom, in which case the weight distribution above the alignment elements makes a secure alignment more difficult.

In an embodiment of the present invention, the opening is configured for passage of a guiding means for guiding a displacement of the brake assembly in the alignment state. In an embodiment, the guiding may be an axial guiding, that is a guiding along an axial direction of the brake assembly. The guiding means can comprise a substantially elongated and rigid guiding element, for example a bolt, a cylinder, a piston, or a rod. It may alternatively also be an integral part of a caliper assembly, or of a further brake assembly structure. For example, if the opening comprises a hole, the guiding means can pass through the hole. As another example, if the opening comprises a recess, the guiding means can be arranged at or within the recess. The brake assembly may be guided along the guiding element to engage with a rotating element to effect a braking force, as already described above. In such a case, the guiding means may guide the brake assembly, while a piston, caliper assembly, or other pushing element may push the brake assembly. To guide may mean that the guiding means and the brake assembly are movable relatively to each other. In that case, for example, the brake assembly may move along the guiding means. Alternatively, to guide may mean that the guiding means are movable together with the brake assembly, e.g. they may be fixed to the brake assembly. In an embodiment, such movement is enacted when effecting a braking force.

In an embodiment of the present invention, the opening comprises a top, a bottom, and a side surface, wherein the side surface forms one of the alignment surfaces. The terms top and bottom may be understood to refer to top and bottom as previously defined. Additionally or alternatively, they may be defined in relation to the engagement of the alignment protrusions with the alignment surfaces. For example, a top surface may be a surface arranged at one side of the alignment surface, and a bottom surface may be a surface arranged on another side of the alignment surface. The top and the bottom surfaces may be parallel to each other. In an embodiment, the top and bottom surfaces may be at a right angle to the side surface which may form the alignment surface. In particular, these three surfaces may delimit a C-shape, that is, substantially three sides of a rectangle. If the brake assembly comprises two openings, they may be mirrored relative to each other. By providing a top and a bottom surface in addition to the alignment surface, an alignment in multiple directions can more easily be achieved, particularly if the two alignment surfaces are parallel. This may prevent a movement of the brake pad shim and the brake backing plate relatively to each other.

In an embodiment of the present invention, the alignment protrusions comprise alignment flaps to engage with the alignment surfaces. An alignment flap may be a substantially flat section of material protruding from the brake pad shim or brake backing plate configured to engage with the alignment surface. In an embodiment, alignment flaps may comprise a flat section of material extending at a right angle from the main body of the brake pad shim or from the brake backing plate. The alignment flaps may be rigid or flexible and may be made of the same or substantially same material as the main body. They may comprise a proximal end, that may be an end closer to the main body of the brake pad shim or to the brake backing plate. They may additionally comprise a distal end, that may be an end further away from the main body of the brake pad shim or the brake backing plate. By providing alignment flaps, a simple manufacture of the alignment protrusions may be achieved. For example, alignment flaps may easily be cut and bent starting from the starting material for a brake pad shim or brake backing plate. Alternatively, they may easily be attached to a main body of the brake pad shim or to the brake backing plate. With a simple, flat geometry, they may also be simpler to design, construct, or utilize during assembly or construction.

In an embodiment of the present invention, one of the brake backing plate and the brake pad shim comprises a circumferential alignment tab configured to engage with a circumference of the other. This may assist in aligning them in a spatial pose relative to each other. A circumferential alignment tab may be a tab arranged at a circumference or outer portion of the brake backing plate or brake pad shim. It may project at a right angle from the main body of the brake pad shim or from the brake backing plate and have a substantially flat, rectangular shape. The circumferential alignment tab may be elongated in a circumferential direction, a circumferential direction being one along the circumference of the brake pad shim or brake backing plate. If the brake pad shim comprises a circumferential alignment tab, the brake backing plate may comprise a complementary engagement element. This may be a circumference, a hole, a slot, a slit, or other engagement element. If the brake backing plate comprises a circumferential alignment tab, the brake pad shim may comprise such a complementary engagement element.

In an embodiment of the present invention, the brake pad shim can comprise two opposite circumferential alignment tabs for engaging two lateral sides of the brake backing plate. This may be to align the brake pad shim in a spatial pose relative to the brake backing plate. The circumferential alignment tabs can be arranged at a right angle to the brake pad shim. Opposite may mean that the circumferential alignment tabs are arranged at opposite sides of the brake pad shim. For example, one may be arranged at a right side and one at a left side of the brake pad shim. The lateral sides of the brake backing plate may be formed by two short sides of the brake backing plate. The lateral sides of the brake backing plate may be the sides that are neither the top nor the bottom side of the brake backing plate. The brake pad shim can comprise two, but also additional circumferential alignment tabs. The circumferential alignment tab may be made of the same material as the main body of the brake backing plate or brake pad shim, or be made of different material. It may in particular be made from the same material as the alignment protrusions.

By providing two opposite circumferential alignment tabs, a secure alignment of the brake pad shim relative to the brake backing plate may be achieved. An elongated shape of the circumferential alignment tabs may provide a particular stability against a rotation. The circumferential alignment tabs can further enable a simpler and faster alignment of the brake pad shim and the brake backing plate during assembly, as well as securing each against a misalignment or displacement in the alignment state. Additionally, the circumferential alignment tab provides a visual guide indicating the correct assembly orientation. This enables an easier assembly and alignment, while also reducing assembly and alignment errors, both for a manual as well as an automated assembly.

In an embodiment of the present invention, one alignment protrusion comprises a semicircular distal tip for relative self-alignment of the brake pad shim and the brake backing plate during assembly. The semicircular distal tip can be substantially semicircular. The semicircular distal tip is arranged at a distal end of the alignment protrusion. Semicircular may mean that the tip can comprise 180 degrees of a circular section, or more, or fewer. In particular, it may comprise between 170 and 190 degrees of a circular section, optionally between 175 and 185, in an embodiment between 179 and 181 degrees. The semicircular distal tip can also be approximately oval. It may also comprise a rectangular section with substantially rounded corners, and therefore comprise straight sections. Such a shape may refer to a geometry in which the straight sections are shorter than a radius of the rounded corners. This gives rise to an appearance of a substantially semicircular section, as well as being geometrically approximately a semicircle. The brake pad shim may comprise the alignment protrusion with a semicircular distal tip and the brake backing plate may comprise a corresponding alignment surface. In particular, the corresponding alignment surface may be delimited by a top and a bottom surface. The semicircular distal tip may be configured to engage at least one of the top and bottom surfaces during assembly. It may then slide along the rounded section to self-align the brake backing plate and the brake pad shim to each other. The semicircular distal tip may also be configured to slide along other elements surrounding the alignment surface. Additionally or alternatively, more than one alignment protrusion may comprise a semicircular distal tip.

An alignment protrusion with a semicircular section, in particular one that is arranged as described above, can ease the assembly of the brake assembly, in particular the alignment of the brake pad shim and the brake backing plate. The semicircular section enables a self-alignment of the brake pad shim and the brake backing plate if, for example, the parts are being assembled with a slight mismatch. In this case the semicircular distal tip can engage with the corresponding alignment means and slide the brake pad shim or brake backing plate into a correct alignment. Thus, an easier assembly is achieved, requiring less precision, effort, complexity, or time.

In an embodiment of the present invention, one alignment protrusion comprises a proximal section and a distal section for engaging one of the alignment surfaces, which is wider than the proximal section. The distal section can have a substantially circular shape. The distal section can also have a substantially rectangular, a hexagonal, or a further shape. The distal section is wider than the proximal section of the alignment protrusion. In particular, the distal section may be at least 10%, 25%, 50%, 100% or 200% wider than the proximal section. Width may be measured as an extent in a plane parallel to the brake backing plate or the brake pad shim. Additionally or alternatively, more than one alignment protrusion may comprise a distal section wider than a proximal section. The widened distal section of the alignment protrusion can allow a better and more robust alignment of the brake pad shim and the brake backing plate. By providing a larger area to contact the alignment surface, the alignment can be more secure. If an adhesive is used at the alignment protrusion, the wider section can allow more adhesive to be used on a larger area, thereby allowing for a stronger connection. The widened distal section may allow for a more efficient use of material, as the connecting portion, that is the proximal section alignment protrusion, can be thinner. It may therefore use less material. Further, the thinner proximal section may be easier to bend, therefore potentially enabling a manufacturing process requiring less force. This may also ease a manufacturing step performed by hand, as less force is necessary to perform the step.

In an embodiment of the present invention, the brake assembly comprises a brake pad mounted to the brake backing plate. A brake pad may be an element configured for engagement with a further rotating element for effecting a braking force. In a preferred embodiment, this may be a disc brake and the brake pad may be pushed against it for braking. That brake pad may be mounted to the brake backing plate by the opening, either by engaging it directly or through mounting means. It may also alternatively be attached by other means or glued to the brake backing plate. In an embodiment of the invention, the brake pad may obstruct the opening. In a different embodiment of the invention, the brake pad may not or substantially not obstruct the opening. The brake pad may be made of material comprising at least one of a high-friction composite, a metal, a ceramic and a polymer. It may further comprise fibers or other reinforcing particles embedded in the material. It may be produced by casting, milling and/or other manufacturing method.

The present invention also relates to a vehicle comprising a brake assembly according to one of the previously described embodiments, wherein the brake assembly is configured to apply a braking force when actuated. The vehicle may further include a wheel, and the brake assembly may be configured to apply a braking force to it when actuated. The vehicle may be a bicycle, a motorcycle, a car, a truck, or another vehicle. The vehicle can comprise multiple brakes, for example one, two, three, or four brakes. It can comprise the same number of brakes as wheels. The brakes can be configured to be engaged together, or alternatively, only a subset of the brakes can be engaged selectively. The brakes can be configured to be engaged by a braking system. They can additionally or alternatively be configured to be engaged by a driver of the vehicle. The brake assembly may be a disk brake assembly, meaning that the rotating element the brake assembly engages is a disk, which may be coupled to the wheel to allow a braking force to be applied.

The present invention also relates to a method for assembling a previously described brake assembly. Such a method comprises the step of aligning the alignment protrusions with the alignment surfaces. It also comprises the steps of moving the brake pad shim and the brake backing plate toward each other. Further, it comprises a step of engaging the alignment protrusions and the alignment surfaces for aligning the brake pad shim and the brake backing plate to each other. The step of aligning the alignment protrusions with the alignment surfaces may comprise moving the brake pad shim and the brake backing plate into an aligned position. The alignment may be imperfect, i.e., the alignment may be imprecise by up to 1 mm, 5 mm, 10 mm, 20 mm, or 50 mm. Additionally or alternatively, an alignment may also be imprecise by up to 0.1°, 0.5°, 1°, 5°, or 10° of rotation. The alignment protrusions and alignment surfaces may be configured to reduce or eliminate this misalignment when being brought into engagement with each other. The alignment may be done by hand by a technician, by assembly personnel, by a machine in an automated manner, or a combination of these.

The alignment protrusions and alignment surfaces can be configured to engage with each other when they come into contact with each other. The engagement of these may align the brake pad shim and the brake backing plate. It may also simplify an alignment of the brake pad shim and the brake backing plate. Additionally or alternatively, the step of engagement may require an additional force to be applied to push the elements into position. In some embodiments, the alignment surfaces and the alignment protrusions may be engaged in such a way as to allow an attachment of the brake pad shim and the brake backing plate. This may, for example, be through friction. Such an attachment may also be achieved through the use of adhesives, magnets, or mechanical means such as screws, clips, or other engagement means. The provided assembly method can be particularly easy to implement, simple to learn for a human operator, effective, quick, and particularly unsusceptible to errors. The provided assembly method may therefore be particularly economical and effective.

### Brief description of the figures

Fig. 1 is a schematic illustration of a disk brake assembly according to one embodiment of the present invention.
Fig. 2 is an enlarged detail view of an alignment flap of the disk brake assembly shown in Fig. 1.
Fig. 3 is another enlarged detail view of the alignment flap of the disk brake assembly shown in Fig. 1.
Fig. 4 is a schematic illustration of a disk brake assembly according to another embodiment of the present invention.
Fig. 5 is an enlarged detail view of an alignment flap comprising a widened section according to another embodiment of the present invention.
Fig. 6 is an enlarged detail view of an alignment flap comprising a widened section according to another embodiment of the present invention.
Fig. 7 is an enlarged detail view of an alignment flap comprising a widened section according to another embodiment of the present invention.
Fig. 8 shows a flowchart of a method for assembling a disk brake assembly according to an embodiment of the present invention.

### Detailed description of the figures

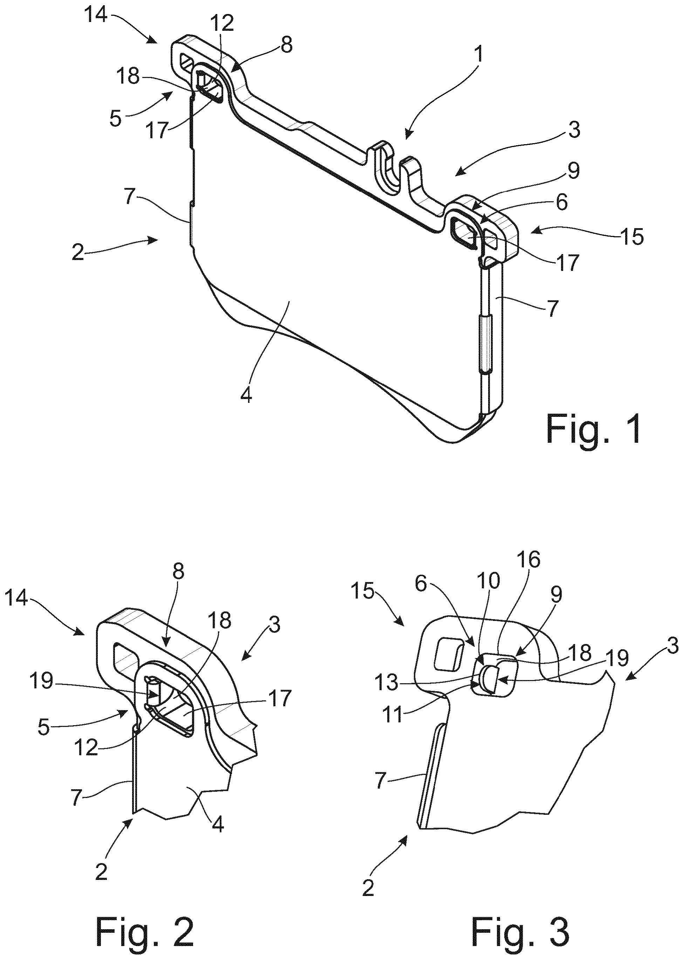

Fig. 1 is a schematic illustration of a brake assembly 1 according to one embodiment of the present invention. The brake assembly 1 comprises a brake pad shim 2 and a brake backing plate 3. The brake backing plate 3 is configured to carry a brake pad (not shown). The brake backing plate 3 comprises two openings 8 and 9 and has a substantially rectangular shape with two longer sides and two shorter sides. The openings 8 and 9 are provided as rectangular holes through the brake backing plate 3. They are arranged, respectively, at a top left corner region 14 and a top right corner region 15. Top refers to an upper end as seen in Fig. 1. The corner regions 14 and 15 are formed by sections of the brake backing plate 3 projecting outward from the rest of the brake backing plate 3. The holes each comprise a top surface 16, a bottom surface 17 and a side surface 18. The side surfaces 18 form the alignment surfaces 12 and 13, on the left and on the right side, respectively, with the alignment surface 13 not visible in Fig. 1. The side surfaces 18 are arranged at sections of the holes pointing away from a centerline of the brake backing plate 3. Of the left opening 8, only the bottom surface 17 and the side surface 18 are visible. Of the right opening 9, only the bottom surface 17 is visible in Fig. 1.

The brake pad shim 2 is configured to attenuate a vibration during a braking process. The brake pad shim 2 comprises a main body 4, two alignment protrusions 5 and 6 provided as two alignment flaps, and two circumferential alignment tabs 7. The main body 4 of the brake pad shim 2 is substantially shaped as a flat rectangular plate. The brake pad shim 2 comprises two sections at the top left and the top right with a substantially rectangular shape which project upwards from the main body 4. The alignment protrusions 5, 6 on the left and on the right side are arranged at these sections. The sections each comprise a rectangular hole. The holes and the alignment protrusions 5 and 6 are manufactured through a process of punching and bending. The alignment protrusions 4 and 5 are bent at a right angle relative to the main body 4. The circumferential alignment tabs 7 have an elongated rectangular shape, being elongated along a direction from top to bottom. They are bent at a right angle relative to the main body 4.

The brake pad assembly 1 is formed by the brake pad shim 2 and the brake backing plate 3, wherein each is arranged at and engaged with the other. In this embodiment, the alignment flaps 5, 6 of the brake pad shim 2 engage with the side surfaces 18 of the brake backing plate 3, these side surfaces 18 forming the alignment surfaces 12 and 13. The top surfaces 16 are arranged above the respective alignment flaps 5, 6 and the bottom surfaces 17 below the respective alignment flaps 5, 6. The holes of the brake pad shim 2, from which the alignment flaps 5, 6 project, are arranged coaxially with the openings 8 and 9 of the brake backing plate 3. They have substantially the same shape but are slightly larger than the holes 8, 9 of the brake backing plate 3. The main body 4 of the brake pad shim 2 is arranged on the brake backing plate 3 and lays flat against it. The circumferential alignment tabs 7 are arranged along the sides of the brake pad shim 2 and engage the brake backing plate 3 at the two shorter sides, which are arranged on opposite sides of the brake backing plate 3.

Fig. 2 is an enlarged detail view of the top left corner of the brake assembly 1 shown in Fig. 1. It represents the top left corner region 14 of the brake backing plate 3, better showing the respective corners of the brake pad shim 2 and the brake backing plate 3. A section of the circumferential alignment tab 7 is visible engaging a side of the brake backing plate 3 and is arranged at a left side of the main body 4. It can be seen that the opening 8 is formed by a rectangular hole with rounded corners, into which the alignment flap 5 projects, engaging with the side surface 18 of said hole 8. The side surface 18 forms the alignment surface 12.

Fig. 3 is an enlarged detail view of an alignment flap 6 of the brake assembly 1 shown from a side opposite to the one shown in Fig. 2. The side shown in Figs. 1 and 2 may be referred to as a front side, while the side shown in Fig. 3 may be referred to as a back side of the assembly 1.

Fig. 3 represents the top right corner region 15 of the brake backing plate 3 shown in Fig. 1, comprising the opening 9 and the alignment surface 13. As in Fig. 2, the alignment flap 6 of the brake pad shim 2, the circumferential alignment tab 7 and one of the holes 8, 9 of the brake backing plate 3 can be seen. The main body 4 of the shim 2 is not visible. The alignment flap 6 comprises a semicircular distal tip 10, which has a shape configured for a self-alignment of the brake pad shim 2 and the brake backing plate 3 during an assembly. If the brake pad shim 2 and the brake backing plate 3 are incorrectly aligned during an assembly, the rounded sides of the semicircular distal tip 10 engage the opening. When this happens and the two components are moved toward each other, the opening 9 slides along the semicircular distal tip 10, self-aligning the components into the correct position.

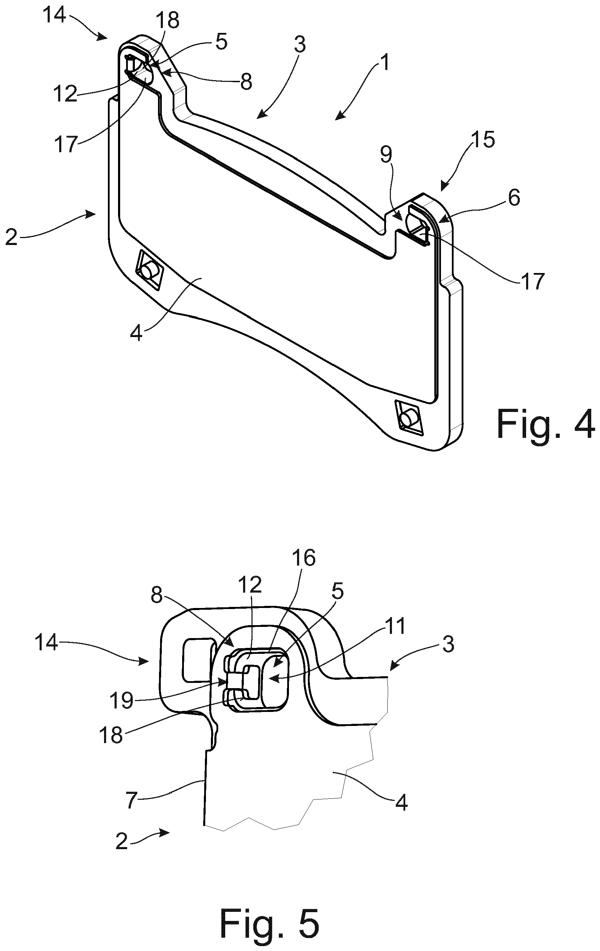

Fig. 4 is a schematic illustration of a brake assembly 1 according to another embodiment of the present invention. The embodiment of Fig. 4 is configured as the embodiment of Fig. 1, except for the differences as described below. The brake pad shim 2 is shown with the main body 4 arranged on the brake backing plate 3. As in Fig. 1, the brake pad shim 2 has two alignment flaps 5, 6 arranged towards an upper side of the main body 4. The alignment flaps 5, 6 are arranged at sections of the main body 4 of the shim 2 having a C-shape, with the opening of the C-shape being directed towards a centerline of the main body 4. As opposed to Fig. 1, the brake pad shim 2 shown in Fig. 4 does not have circumferential alignment tabs 7. The brake backing plate 3 comprises a top left corner region 14 and a top right corner region 15 with a shape approximating a rounded triangle, comprising the openings 8 and 9 as described in connection with Fig. 1.

Fig. 5 is an enlarged detail view of an alignment flap 5 comprising a widened distal section 11 according to an embodiment of the present invention. The alignment flap 5 of Fig. 5 can be provided in either one of the embodiments of Figs. 1 and 4. Similar to the detail view shown in Fig. 2, Fig. 5 shows a brake pad shim 2 arranged at a brake backing plate 3, with the alignment flap 5 engaging the hole 8. It shows the top left corner region 14 of a brake baking plate 3. In particular, the alignment flap 5 is engaging the side surface 18 forming the alignment surfaces 12. The hole 8 further comprises the top surface 16, which is arranged above, and the bottom surface 17, which is arranged below the side surface 18, the latter not being shown in Fig. 5. The alignment flap 5 has a widened distal section 11 that is substantially rectangular, with the alignment flap 5 forming a T-shape. As already described in relation to previous figures, the alignment flap 5 projects into and engages with the opening 8. The distal section 11 of the flap 5 is wider than a proximal section 19 of said flap 5.

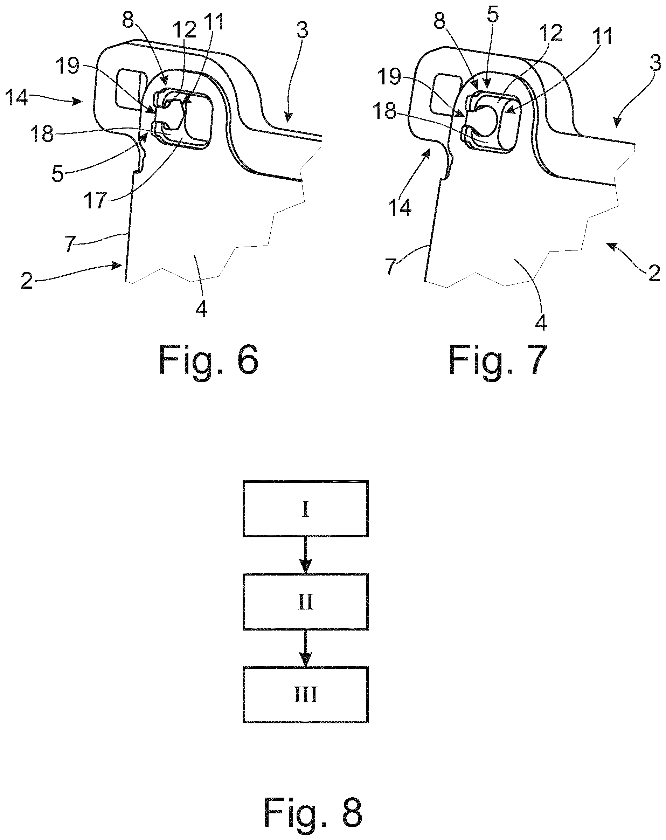

Fig. 6 shows a detail view analogous to Fig. 5, differing only in that the widened distal section 11 of the alignment flap 5 has a substantially hexagonal shape. The hexagonal shape is arranged such that a corner of the hexagon is pointing along an axial direction of the opening 8 of the brake backing plate 3. Fig. 7 shows a detail view analogous to Figs. 5 and 6, differing only in that the widened distal section 11 of the alignment flap 5 has a substantially circular shape.

Fig. 8 shows a flowchart of a method for assembling a brake assembly 1 according to an embodiment of the present invention. The method comprises a first step I of aligning the protrusions 5 and 6 with the alignment surfaces 12 and 13, and a second step II of moving the brake pad shim 2 and the brake backing plate 3 toward each other. Finally, it shows a third step III of engaging the alignment protrusions 5 and 6 with the alignment surfaces 12 and 13, thereby aligning the brake pad shim 2 and the brake backing plate 3. The steps are shown to be executed sequentially, however, depending on the implementation of the method, they may be performed contemporaneously or with a substantial temporal overlap. The steps may be performed by a technician or assembly personnel, or by a machine such as an industrial robot.

### Reference signs

- 1: brake assembly
- 2: brake pad shim
- 3: brake backing plate
- 4: main body
- 5, 6: alignment protrusions
- 7: circumferential alignment tab
- 8, 9: opening
- 10: semicircular distal tip
- 11: distal section
- 12, 13: alignment surfaces
- 14: top left corner region
- 15: top right corner region
- 16: top surface
- 17: bottom surface
- 18: side surface
- 19: proximal section
- I: aligning protrusions with alignment surfaces
- II: moving brake pad shim and brake backing plate toward each other
- III: engaging alignment protrusions with alignment surfaces

## Claims

1. A brake assembly (1) comprising a brake backing plate (3) configured for attachment of a brake pad and a brake pad shim (2) configured for attenuating a vibration during a braking process, wherein one of the brake backing plate (3) and the brake pad shim (2) comprises two alignment surfaces (12, 13) formed by at least one opening (8; 9) and the other one of the brake backing plate (3) and the brake pad shim (2) comprises two alignment protrusions (5, 6) to engage with the two alignment surfaces (12, 13) for aligning the brake backing plate (3) and the brake pad shim (2) in a predetermined alignment state, wherein the opening (8; 9) is substantially unobstructed by the engagement of the alignment protrusions (5, 6) with the alignment surfaces (12, 13) in the alignment state.

2. The brake assembly (1) according to claim 1, **characterized in that** the brake backing plate (2) comprises the opening (8; 9) and the brake pad shim (3) comprises the alignment protrusions (5, 6).

3. The brake assembly (1) according to claim 2, **characterized in that** the brake backing plate (3) comprises a first opening (8) forming a first alignment surface (12) and a second opening (9) forming a second alignment surface (13).

4. The brake assembly (1) according to claim 3, **characterized in that** the first and second openings (8, 9) are provided at the top left and right corner regions (14, 15) of the brake backing plate (3).

5. The brake assembly (1) according to one of the preceding claims, **characterized in that**, in the alignment state, the opening (8; 9) is configured for passage of a guiding means for guiding a displacement of the brake assembly (1).

6. The brake assembly (1) according to one of the preceding claims, **characterized in that** the opening (8; 9) comprises a top (16), a bottom (17) and a side surface (18), wherein the side surface (18) forms one of the alignment surfaces (12, 13).

7. The brake assembly (1) according to one of the preceding claims, **characterized in that** the alignment protrusions (5, 6) comprise alignment flaps to engage with the alignment surfaces (12, 13).

8. The brake assembly (1) according to one of the preceding claims, **characterized in that** one of the brake backing plate (3) and the brake pad shim (2) comprises a circumferential alignment tab (7) configured to engage with a circumference of the other one of the brake backing plate (3) and the brake pad shim (2).

9. The brake assembly (1) according to claim 8, **characterized in that** the brake pad shim (2) comprises two opposite circumferential alignment tabs (7) for engaging two lateral sides of the brake backing plate (3).

10. The brake assembly (1) according to one of the preceding claims, **characterized in that** one alignment protrusion (5; 6) comprises a semicircular distal tip (10) for relative self-alignment of the brake pad shim (2) and the brake backing plate (3) during assembly.

11. The brake assembly (1) according to one of the preceding claims, **characterized in that** one alignment protrusion (5; 6) comprises a proximal section (19) and a distal section (11) for engaging one of the alignment surfaces (12, 13), which is wider than the proximal section (19).

12. The brake assembly (1) according to one of the preceding claims, **characterized in that** the brake assembly (1) comprises a brake pad mounted to the brake backing plate (3).

13. A vehicle comprising a brake assembly (1) according to one of the preceding claims, **characterized in that** the brake assembly (1) is configured to apply a braking force.

14. A method for assembling a brake assembly (1) according to one of the claims 1 to 12, comprising the following steps:
- aligning (I) the alignment protrusions (5, 6) with the alignment surfaces (12, 13);
- moving (II) the brake pad shim (2) and the brake backing plate (3) toward each other; and
- engaging (III) the alignment protrusions (5, 6) with the alignment surfaces (12, 13) for aligning the brake pad shim (2) and the brake backing plate (3) relatively to each other.
